# EUROPEAN PATENT APPLICATION

(11) **EP 1 041 734 A1**
(43) Date of publication of application: **04.10.2000**
(21) Application number: 99440066.1
(22) Date of filing: 31.03.1999
(51) Int. Cl.: H04B 7/005

(54) **Radio transmission method in a wireless telecommunications system with pilot and data channels estimation**

(71) Applicant: ALCATEL, 75008 Paris (FR)
(72) Inventor: Mortensen, Ivar, Dr., 70825 Korntal (DE)
(74) Representative: Brose, Gerhard, Dipl.-Ing.

(57) **Abstract**

A method for radio transmission in a wireless telecommunications network is known which makes available a plurality of CDMA transmission channels (CDMA: code division multiple access). The method uses a pilot pseudorandom sequence to transmit an unmodulated pilot signal. The pilot channel is estimated, so that coherent demodulation of information signals arriving by multipath can be carried out at the receiver.

An improved method (100) is proposed which involves estimating not only the pilot channel (101) but also the information channel (102), and subsequently optimizing the estimation of the information channel by comparing it with the estimation of the pilot channel (110). Based on the unambiguous estimates for the pilot channel, the initially ambiguous estimates for the information channel are changed into unambiguous estimates (120).

## Description

This invention relates to a radio transmission method for a wireless telecommunications system as set forth in the preamble of claim 1.

The invention further relates to a radio receiver suitable for carrying out the radio transmission method, to a base station equipped with such a radio receiver, to a wireless telecommunications terminal equipped with such a radio receiver, and to a wireless telecommunications system as set forth in the preambles of the respective independent claims.

In a book by A.J. Viterbi entitled "CDMA, Principles of Spread Spectrum Communication", published by Addison-Wesley, Reading, Massachusetts, USA, 6th Printing, July 1998, a method for radio transmission in a wireless telecommunications network is described in Chapters 4.3 and 4.4 on pages 84-92 which makes available a plurality of CDMA transmission channels (CDMA: code division multiple access) in the form of different coding sequences. User-specific sequences are used to transmit information signals ("data-modulated signals"). Accordingly, information signals are transmitted on information channels. In addition, a pilot pseudorandom sequence is used to transmit an unmodulated pilot signal. This means that a pilot signal is transmitted on a pilot channel. In Chapter 4.4 it is described that the pilot channel is estimated in order to be able to carry out a coherent demodulation of the information signals arriving by multipath.

Accordingly, each received information signal is demodulated based on estimates which characterize the pilot channel, not the information channel. This is necessary because the estimates obtained from the unmodulated pilot signal are unique, i.e., unambiguous, while the estimates obtained from the modulated information signals are not unique. The prior-art method is sensitive to fading and multipath propagation, which may, at least temporarily, result in the characteristics of the pilot channel differing greatly from those of the information channels. It would therefore be desirable if the coherent demodulation of each information signal could be largely based on a reliable estimation of the respective information channel.

It is an object of the invention to improve the method referred to at the beginning so as to make the demodulation of the information signals as immune to interference as possible.

In addition, a radio receiver suitable for carrying out the radio transmission method, a base station equipped with such a radio receiver, a wireless telecommunications terminal equipped with such a radio receiver, and a wireless telecommunications system are to be provided.

This object is obtained by a method with the features of claim 1 and by a radio receiver, a base station, a telecommunications terminal, and a telecommunications system with the features of the respective independent claims.

According to the invention, at the receiver, not only the pilot channel but also the information channel is estimated, and the estimation of the transmission channel is subsequently optimized by comparing it with the estimation of the pilot channel.

Based on the unambiguous estimates for the pilot channel, the initially ambiguous estimates for the information channel can be changed into unambiguous estimates which permit an improved demodulation of the information signals. The optimized estimation of the transmission channel provides reliable results which give realistic channel parameters at any time, i.e., also during radio transmission disturbances.

Further advantageous features of the invention are defined in the subclaims.

Accordingly, it is advantageous to compare a set of ambiguous estimates obtained by the estimation of the information channel with a set of unambiguous estimates obtained by the estimation of the pilot channel, and to select those estimates for the information channel which are closest to the estimates for the pilot channel. This comparing and selecting method makes it possible to determine the unambiguous estimates very quickly and to perform channel estimation in real time.

Particularly advantageously, the selected estimates for the information channel are combined with the estimates for the pilot channel into a uniform set of estimates for the information and pilot channels. This can be done, for example, using the maximal ratio combining technique. The combination causes an error correction of the channel estimation in which those of the selected estimates are corrected which are particularly erroneous.

The invention will become more apparent from the following description of an embodiment when taken in conjunction with the accompanying drawings, in which:
- Figure 1: shows schematically the structure of a telecommunications network in accordance with the invention;
- Figure 2: is a flowchart for a prior-art radio transmission method; and
- Figure 3: is a flowchart for a radio transmission method in accordance with the invention.

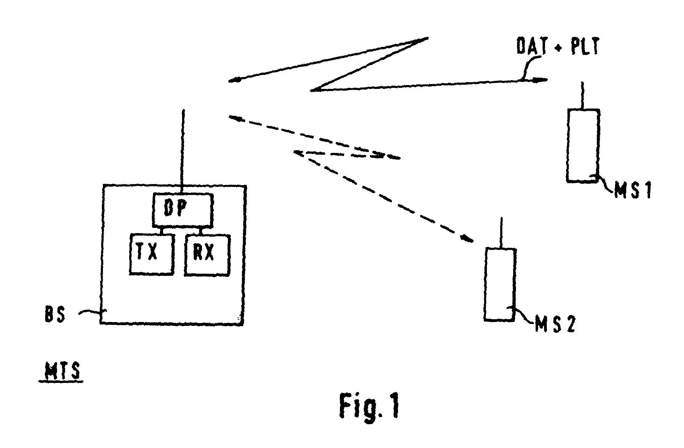

Figure 1 shows schematically the structure of a wireless telecommunications system MTS in accordance with the invention. The system contains base stations which exchange CDMA radio signals with wireless telecommunications terminals. Figure 1 shows, by way of example, one base station BS and two telecommunications terminals MS1 and MS2. This base station BS serves one cell in the wireless telecommunications system MTS. The telecommunications terminals MS1 and MS2, which are located in this cell, are in two-way radio communication with the base station BS.

Radio communication is carried out by the CDMA method, which is known per se and in which information channels are made available in the form of coding sequences. In addition, a pilot channel is made available in the form of a pseudorandum pilot sequence. The invention will be described with reference to the following radio signals, which the telecommunications terminal MS1 sends to the base station: a modulated radio signal, namely an information signal DAT, and an unmodulated radio signal, namely a pilot signal PLT. For the reception of these radio signals, the base station BS contains a receiver RX, which is connected to the antenna through a duplexer DP. The base station further contains a transmitter TX (not described in the following), which is also connected to the duplexer DP.

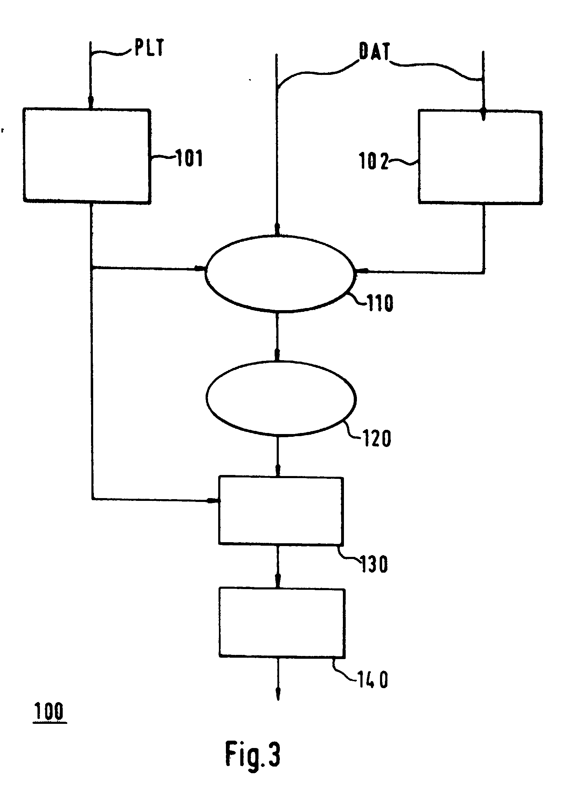

The receiver RX uses the method described below with reference to Figure 3, which permits improved demodulation of the received information signal.

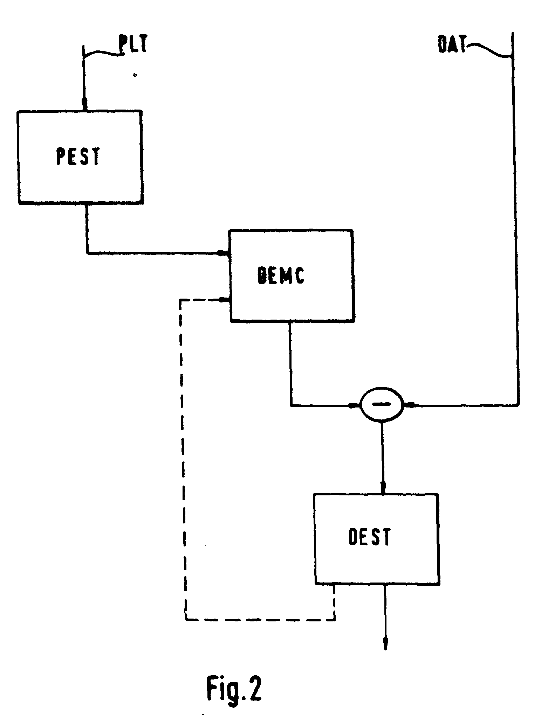

First, a conventional method of receiving an information signal and a pilot signal will be described with reference to Figure 2.

The received pilot signal PLT is subjected to a channel estimation PEST, which serves to estimate the channel parameters characteristic of the pilot channel. Since the pilot signal PLT is an unmodulated radio signal, the estimates obtained by the channel estimation PEST are unambiguous. These estimates are used for the subsequent demodulation and decoding DEMC of the received information signal DAT. The decoding is preferably performed using the Viterbi algorithm. The decoded data are then compared with the nondecoded data of the information signal, and the result of the comparison is subjected to a second channel estimation DEST. This second channel estimation DEST provides the estimates characteristic of the information channel. If these estimates should not be suited for characterizing the information channel realistically, the demodulation and decoding step, the comparing step, and the channel estimation step will be repeated.

This prior-art method is generally suited for estimating an information channel sufficiently well. However, since this method relies very heavily on the accuracy of the pilot estimation, the accuracy of the estimation depends on how well and error-free the pilot signal PLT is received.

The method according to the invention, which does not have these disadvantages, will now be described with reference to Figure 3.

The method according to the invention, 100, comprises steps 101 to 140. In a first step 101, the received pilot signal PLT is estimated. The estimates so obtained are unambiguous and represent the channel parameters characteristic of the pilot channel. Parallel with step 101, the received information signal DAT is estimated in a step 102. Since the information signal DAT is generated at the transmitting end by an I/Q modulator, in this example a Gaussian minimum shift keying (GMSK) modulator, it can be split at the receiving end into an in-phase component and a quadrature component. In the frequency domain, the quadrature components can be represented in the form of vectors in a complex plane. The estimates obtained lie in this complex I/Q plane and are ambiguous. To get unambiguous estimates for the information channel, in a subsequent step 1 10 the ambiguous estimates for the information channel are compared with the unambiguous estimates for the pilot channel. Those estimates for the information channel which come closest to the unambiguous estimates for the pilot channel are selected in a further step 120 to obtain unambiguous estimates for the information channel.

Thus, these unambiguous estimates are also obtained by evaluating the received information signal DAT and are therefore better suited to characterizing the information channel than the estimates obtained solely from the pilot signal. The unambiguous estimates for the information channel could already be used for demodulating and/or decoding the information signal DAT.

Particularly advantageously, however, these estimates for the information channel are combined with the estimates for the pilot channel into a uniform set of estimates which is then used for demodulation and/or decoding. Accordingly, in a further step 130 the estimates for the information channel are combined with the estimates for the pilot channel. This is done using the maximal ratio combining technique, which is known per se. A uniform set of estimates is thus obtained which is then used in a further step 140 for demodulating and decoding the information signal DAT. As a result of the combination of estimates for the information channel and the pilot channel, single errors in the estimates are compensated for. Through this measure, the method 100 becomes particularly immune to transmission interference, particularly to fading and multipath.

## Claims

1. A radio transmission method (100) for a wireless telecommunications system (MTS), said radio transmission method (100) comprising coherently transmitting at least one information signal (DAT) on an information channel and at least one pilot signal (PLT) on a pilot channel, and estimating (101) the pilot channel at the receiving end,
**characterized in** that at the receiving end, the information channel is also estimated (102), and that the estimation of the information channel is subsequently optimized (110) by comparing it with the estimation of the pilot channel.

2. A radio transmission method (100) as claimed in claim 1,
characterized in that a set of ambiguous estimates obtained by the estimation of the information channel is compared (110) with a set of unambiguous estimates obtained by the estimation of the pilot channel, and that those estimates for the information channel are selected (120) which are closest to the estimates for the pilot channel.

3. A radio transmission method (100) as claimed in claim 2,
characterized in that the selected estimates for the information channel are combined (130) with the estimates for the pilot channel into a uniform set of estimates for the information channel and for the pilot channel.

4. A radio transmission method (100) as claimed in claim 3,
characterized in that the received information signal (DAT) is demodulated (140) using the uniform set of estimates.

5. A radio transmission method as claimed in claim 2,
characterized in that the received information signal is demodulated using the selected estimates for the information channel.

6. A radio receiver (RX) for coherently receiving at least one information signal (DAT) on an information channel and at least one pilot signal (PLT) on a pilot channel, comprising means for estimating the pilot channel,
**characterized in** that the radio receiver (RX) further comprises means for estimating the information channel, means for comparing the estimates obtained, and computing means which optimize the estimation of the transmission channel by comparing it with the estimation of the pilot channel.

7. A wireless telecommunications terminal comprising a radio receiver for coherently receiving at least one information signal on an information channel and at least one pilot signal on a pilot channel, the radio receiver comprising means for estimating the pilot channel,
**characterized in** that the radio receiver further comprises means for estimating the information channel, means for comparing the estimates obtained, and computing means which optimize the estimation of the transmission channel by comparing it with the estimation of the pilot channel.

8. A base station (BS) for a wireless telecommunications system (MTS), comprising a radio receiver (RX) for coherently receiving at least one information signal (DAT) on an information channel and at least one pilot signal (PLT) on a pilot channel, the radio receiver (RX) comprising means for estimating the pilot channel,
**characterized in** that the radio receiver (RX) further comprises means for estimating the information channel, means for comparing the estimates obtained, and computing means which optimize the estimation of the transmission channel by comparing it with the estimation of the pilot channel.

9. A wireless telecommunications system (MTS) with at least one radio transmitter which transmits at least one information signal (DAT) on an information channel and at least one pilot signal (PLT) on a pilot channel, and with at least one radio receiver (RX) for coherently receiving the information signal (DAT) and the pilot signal (PLT), the radio receiver (RX) comprising means for estimating the pilot channel,
**characterized in** that the radio receiver (RX) further comprises means for estimating the information channel, means for comparing the estimates obtained, and computing means which optimize the estimation of the transmission channel by comparing it with the estimation of the pilot channel.
